# EUROPÄISCHE PATENTSCHRIFT

(11) **EP 0 813 919 B1**
(45) Veröffentlichungstag und Bekanntmachung des Hinweises auf die Patenterteilung: **22.08.2001**
(21) Anmeldenummer: 97109800.9
(22) Anmeldetag: 17.06.1997
(51) Int. Cl.: B09B 3/00, B08B 17/00

(54) **Verfahren zum Bohren in asbesthaltigen Werkstoffen und seine Anwendung für die Sanierung von Asbestzementdächern**
Method for drilling asbestos-containing materials and its use in sanitizing asbestos cement roofs
Procédé de forage des matériaux contenant de l'amiante et son utilisation pour l'assainissement des toits en amiante-ciment

(30) Priorität: 19.06.1996 LU 88777
(43) Veröffentlichungstag der Anmeldung: 29.12.1997
(73) Patentinhaber: Commercial Intertech S.A., 9230 Diekirch (LU)
(72) Erfinder: Krier, V., 7456 Lintgen (LU); Krawietz, U. Dr., 13583 Berlin (DE)
(74) Vertreter: Schmitt, Armand

(56) Entgegenhaltungen:
- DE-A- 3 915 656
- DE-C- 962 330
- NL-A- 8 902 959
- US-A- 5 034 041

## Beschreibung

Die vorliegende Erfindung betrifft ein Verfahren zum Bohren von asbesthaltigen Werkstoffen, sowie die Anwendung dieses Verfahrens für die Sanierung von Asbestzementdächern.

In der Vergangenheit wurden zahlreiche Hallenbauten mit Asbestzementplatten eingedeckt. Diese Dächer entsprechen nicht mehr dem heutigen Stand der Technik, da einerseits der Wärmeverlust zu hoch ist und andererseits, Asbestfasern durch Verwitterung der Dachoberfläche in die Umgebung abgegeben werden. Die freigesetzten Asbestfasern stellen, wie inzwischen allgemein bekannt, ein nicht zu vernachlässigendes Gesundheitsrisiko dar. Es besteht demnach ein dringendes Bedürfnis die bestehenden Asbestzementdächer schnellstmöglich durch energiesparende Dächer aus gesundheitsunschädlichen Werkstoffen zu ersetzen. Ist das Entfernen einer bestehenden Dachhaut an sich schon problematisch, so ist das Entfernen einer Dacheindeckung aus Asbestzement jedoch noch weitaus problematischer, da hierbei große Mengen an Asbestfasern freigesetzt werden, und eine umweltgerechte Entsorgung der alten Asbestzementplatten überdies sehr teuer ist. Es wurde daher vorgeschlagen, das vorhandene Dach aus Asbestzement integral bestehen zu lassen und mit einer zweiten Dachschale aus Metall zu überdecken, wobei der Hohlraum zwischen dem Asbestzementdach und der äußeren Dachschale mit einem wärmedämmenden Material aufgefüllt wird.

Sanierungsverfahren für Asbestzementdächer der vorbeschriebenen Gattung sind zum Beispiel aus den Patentanmeldungen DE-A-3603716 und EP-A-0145854 bekannt. Bei diesen Sanierungsverfahren werden Abstandhalter für die zweite Dachschale auf der vorhandenen Dachunterkonstruktion mittels Schraubbolzen befestigt. Hierzu muß die bestehende Dacheindeckung aus Asbestzement mit Bohrlöchern versehen werden, wobei gesundheitsgefährdender Asbestzementstaub freigesetzt wird. Um diesen Asbestzementstaub während des Bohrvorgangs direkt an der Bohrstelle aufzunehmen, werden heute Staubsauger benutzt. Die Filter dieser Staubsauger sind in den meisten Fällen jedoch nicht geeignet, um die besonders kleinen Asbestmikrofasern restlos aus der abgesaugten Luft zu filtern. Die Entleerung der Staubsauger ist ebenfalls problematisch da hierbei wiederum Asbestmikrofasern freigesetzt werden können. Die Entsorgung des abgesaugten Bohrstaubs muß unter strengen Sicherheitsvorkehrungen erfolgen. Weiterhin ist hervorzuheben, daß widrige Windverhältnisse die Wirksamkeit der Absaugung mittels Staubsauger beeinträchtigen können. Schlußfolgernd muß leider festgestellt werden, daß das Durchbohren von Dachelementen aus Asbestzement mit hohen Gesundheitsrisiken für die ausführenden Arbeiter verbunden ist. Es gibt daher in manchen Ländern auch Bestrebungen Sanierungsverfahren für Asbestzementdächer die ein Durchbohren von Dachelementen aus Asbestzement erfordern generell zu untersagen, beziehungsweise kostenintensive Schutzmaßnahmen für die ausführenden Arbeiter zu verlangen.

Um bei der Sanierung von Asbestzementdächern ein Durchbohren von Dachelementen aus Asbestzement zu verhindern wurde in der DE-A-4229385 vorgeschlagen die Verschraubung der Asbestzement-Wellplatten auf der bestehenden Dachunterkonstruktion zur Verankerung von parallel zum Traufenrand verlaufenden Trägerschienen zu benutzen. Diese Lösung ist in den meisten Fällen jedoch aus statischen Gründen kaum zu vertreten. Es wurde ebenfalls vorgeschlagen Abstandhalter mittels Spezialkleber auf das bestehende Asbestzementdach aufzukleben. Um ein einwandfreies Abbinden des Klebers mit dem Asbestzement zu gewährleisten, muß die Klebestelle jedoch vorher mechanisch gereinigt werden. Bei dieser mechanischen Grundreinigung werden mindestens ebenso viele Asbestmikrofasern wie beim Bohren freigesetzt. Es besteht demnach noch immer ein dringendes Bedürfnis für eine universell anwendbare Sanierungsmethode für bestehende Asbestzementdächer, die Gesundheitsrisiken für die ausführenden Arbeiter weitgehend ausschließt.

Aus der DE-A-3915656 ist ein Verfahren zur staubfreien Demontage von asbesthaltigen Bau- und Isolierstoffen bekannt. Vor der Demontage von Asbestbaustoffen wird eine Calciumchloridlösung auf und hinter den Asbestbaustoff versprüht, bzw der Asbestbaustoff ganz mit der Lösung getränkt. Die Calciumchloridlösung soll die losen Asbestfasern binden und das Verwirbeln von Staubteilen verhindern. In einem zweiten Arbeitsgang wird dann eine Calciumchloridpaste auf die Materialoberfläche aufgetragen. Diese Paste soll verhindern, dass bei der Demontage, beim Transport und bei der Deponierung Asbestfasern freigesetzt werden.

Die vorliegende Erfindung ermöglicht solche Sanierungsmethoden durch ein Verfahren zum risikolosen Bohren in asbesthaltigen Werkstoffen, insbesondere in Asbestzement, nach Anspruch 1.

Durch das erfindungsgemäße Verfahren kann ein Bohren von Löchern in Asbestzement ohne meßtechnisch nachweisbare Faseremission erfolgen, da die freigesetzten Fasern unmittelbar im Bereich der Bohrstelle durch das Faserbindemittel verklebt werden. Die mit dem Faserbindemittel gebundenen Asbestmikrofasern verlieren ihre Gefährlichkeit für den ausführenden Arbeiter. Eine problematische Entsorgung des Bohrstaubs entfällt, da das Faserbindemittel sich anschließend verfestigt und somit den Bohrstaub mit den gefährlichen Asbestmikrofasern dauerhaft bindet.

Das Faserbindemittel wird vorteilhaft während des Bohrvorgangs kontinuierlich zugeführt, zum Beispiel in Richtung der Bohrstelle gesprüht. Hierdurch ist gewährleistet, daß mit einer kleinen Menge an Faserbindemittel, die freigesetzten Bohrspäne und der freisetzte Bohrstaub stets einwandfrei benetzt und in das Faserbindemittel eingebunden werden.

Falls der asbesthaltige Werkstoff mit einer Durchgangsbohrung versehen werden soll, so ist die Bohrstelle vorzugsweise oberhalb einer Gegenunterlage anzuordnen. Ein flüssiges Faserbindemittel, das in die Bohrstelle eingebracht wird, breitet sich dann nach dem Durchbohren zwischen Gegenunterlage und durchbohrtem Werkstoff aus und verfestigt sich hier, unter Einbindung des beim Durchbohren entstandenen Bohrstaubs.

Es wird vorteilhaft ein Faserbindemittel verwendet das im Bereich der Bohrstelle, eine dauerhafte Versiegelung ausbildet, wobei die freigesetzten Asbestfasern in diese Versiegelung eingebunden sind.

Es wird besonders begrüßt werden, daß das erfindungsgemäße Bohrverfahren ein Verfahren zum Sanieren eines mit Elementen aus Asbestzement gedecktem Dach ermöglicht, das Gesundheitsrisiken für die ausführenden Arbeiter weitgehend ausschließt. Entsprechend diesem Verfahren werden Abstandhalter für eine zweite Dachschale auf einer vorhandenen Dachunterkonstruktion befestigt, wobei zum Befestigen der Abstandhalter die Dachelemente aus Asbestzement nach dem erfindungsgemäßen Bohrverfahren durchbohrt werden.

Die meisten Asbestzementdächer umfassen Wellplatten die auf Pfetten aufliegen. Das Durchbohren der Wellplatten erfolgt hierbei vorteilhaft in den Tälern der Wellplatten, dort wo letztere auf den Pfetten aufliegen. In diesem Fall bilden die Pfetten eine Gegenunterlage aus, wobei flüssiges Faserbindemittel sich zwischen Gegenunterlage und Wellplatte ausbreitet und sich hier unter Einbindung des beim Durchbohren entstandenen Bohrstaubs verfestigt.

Vorzugsweise werden für die Befestigung der Abstandhalter auf der vorhandenen Dachunterkonstruktion Befestigungsmittel eingesetzt, die derart ausgebildet sind, daß die Abstandhalter keinen Druck auf die Asbestzement-Wellplatten ausüben. Hierdurch wird verhindert, daß die Asbestzement-Wellplatten im Bereich der Bohrlöcher durch die Abstandhalter beschädigt werden und es nachträglich zum Freisetzen von Asbestfasern kommt.

Im folgenden wird das erfindungsgemäße Verfahren, angewandt im Rahmen der Sanierung eines Asbestzementdachs, anhand der beiliegenden Zeichnungen beispielsweise beschrieben. Es zeigen:

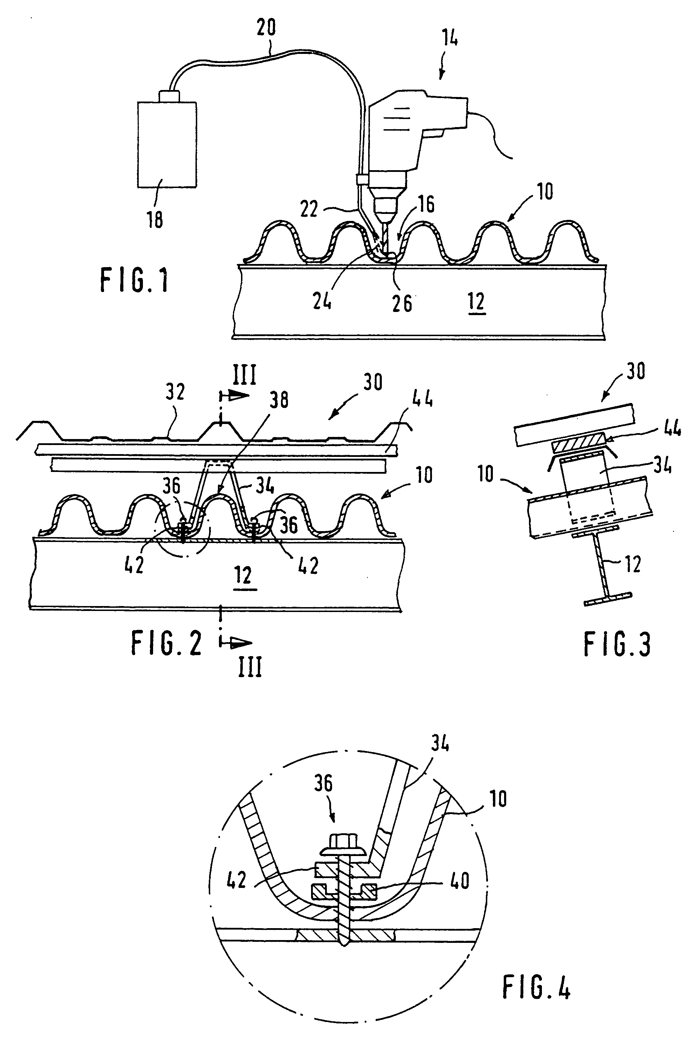

- Fig. 1: einen Schnitt durch ein zu sanierendes Dach, parallel zum Traufenrand, zum Illustrieren des erfindungsgemäßen Bohrvorgangs;
- Fig.°2: einen Schnitt, parallel zum Traufenrand, durch den Aufbau des sanierten Dachs;
- Fig.°3:: einen Schnitt entlang der Schnittlinie 3-3 der Fig.°2;
- Fig.°4:: einen vergrößerten Ausschnitt aus der Fig.°2.

Figur 1 zeigt einen Schnitt durch ein zu sanierendes Dach, parallel zum Traufenrand. Die Dacheindeckung besteht aus Wellplatten 10 aus Asbestzement, die von Pfetten 12 getragen werden. Die Bezugszahl 14 zeigt eine Handbohrmaschine zum Bohren von Durchgangslöcher in die Wellplatten 10. Diese Durchgangslöcher werden in regelmäßigen Abständen, in den Wellentälern 16 der Wellplatten 10 über den Pfetten 12 gebohrt. Erfindungsgemäß wird beim Bohren ein flüssiges Faserbindemittel derart zugesetzt, daß es während des Bohrvorgangs die freigesetzten Asbestfasern bindet, bevor es sich anschließend verfestigt. Dieses Faserbindemittel befindet sich in einem Vorratsbehälter 18, von wo es über einen Schlauch 20 einer Sprühdüse 22 unter Druck zugeführt wird. Diese Sprühdüse 22 ist derart an der Bohrmaschine 14 angebracht, daß sie einen Sprühstrahl 24 erzeugt der die Bohrstelle 26 und ihre unmittelbare Umgebung bedeckt. Als Faserbindemittel kann zum Beispiel ein Bindemittel verwendet werden das zum dauerhaften Versiegeln von Asbestoberflächen verwendet wird. Ein solches Mittel wird zum Beispiel in Deutschland von der Firma "Josef Bitter GmbH & CO. KG", D-63785 Obernburg, unter der Bezeichnung "JOBI® Fibre Protect" für die Sanierung von Spritzasbest-Oberflächen verkauft. Das flüssige Faserbindemittel, das während des Bohrvorgangs kontinuierlich auf die Bohrstelle gesprüht wird, benetzt und beschichtet die Bohrspäne und den Bohrstaub und verklebt sie mit dem Asbestzement. Asbestmikrofasern können während des Bohrvorgangs demnach nicht freigesetzt werden. Beim Trocknen verfestigt sich das aufgesprühte Faserbindemittel und bildet eine dauerhafte Versiegelung im Bereich der Bohrstelle, wobei die Bohrspäne und der Bohrstaub in diese Versiegelung dauerhaft eingebunden sind. Die Versiegelung kann selbstverständlich nach Abschluß des Bohrvorgangs durch Aufbringen einer zusätzlichen Beschichtung verstärkt werden. Faserbindemittel das in das Bohrloch einfließt, beziehungsweise nach Herausziehen des Bohrers zusätzlich in das Bohrloch eingebracht wird, breitet sich zwischen Pfette und durchbohrter Wellplatte aus und verfestigt sich hier unter Einbindung des beim Durchbohren entstandenen Bohrstaubs. Es wurde inzwischen nachgewiesen, daß durch das vorbeschriebene Verfahren ein Bohren von Löchern in Asbestzement ohne meßtechnisch nachweisbare Faseremission erfolgen kann.

In den Figuren 2, 3 und 4 ist der Aufbau des sanierten Daches im Schnitt dargestellt. Eine zweite Dachschale 30 aus profilierten Blechen 32 überdeckt das alte Asbestzementdach 10. Diese zweite Dachschale 30 ist auf den bestehen Pfetten mittels Abstandhaltern 34 befestigt. Hierzu wurden die Wellplatten in regelmäßigen Abständen in den Wellentälern über den Pfetten 12 wie oben beschrieben durchbohrt, und durch diese Bohrlöcher Befestigungsschrauben 36 in die Pfetten 12 eingeschraubt. Wie aus Figur 2 ersichtlich können die Abstandhalter 34 zum Beispiel als "Omega"-Profil ausgebildet sein, das jeweils einen Wellenberg 38 der Wellplatte 10 überspannt und zwei seitliche abstehende Befestigungsfüße 42 aufweist. Um eine Beschädigung des Asbestzementes in den Wellentälern der Wellplatte 10 zu vermeiden, ist an den Befestigungsschrauben 36, in einem gewissen Abstand zur Oberfläche des Asbestzements jeweils ein Auflager 40 für den Fuß 42 eines Abstandhalters 34 angebracht (siehe Figur 4). Das Gewicht der zweiten Dachschale 30 und die zu berücksichtigende Schneelast wird somit durch die Abstandhalter 34, das Auflager 40 und die Befestigungsschrauben 36 unmittelbar auf die Pfetten 12 übertragen, so daß eine mechanische Belastung der alten Astbesteindeckung gänzlich vermieden wird. Alternativ zu den Auflagern 40, können unter den Füßen 42 der Abstandhalter 34 auch Abstandhülsen (nicht gezeigt) angeordnet werden, die in die Bohrlöcher der Wellplatten eingesetzt sind und sich auf den Pfetten 12 abstützen. Die Befestigungsschrauben, die durch die Abstandhülsen in die Pfetten 12 eingeschraubt werden und die Füße 42 der Abstandhalter 34 gegen die Abstandhülsen pressen, müssen in diesem Falle lediglich Zugspannungen übertragen. Wie aus Figur 2 und 3 ersichtlich, werden auf die Abstandhalter 34, parallel zu den Pfetten 12, Befestigungsschienen 44 angebracht, worauf die profilierten Bleche 32 befestigt werden.

## Patentansprüche

1. Verfahren zum Bohren in asbesthaltigen Werkstoffen, insbesondere in Asbestzement, dadurch gekennzeichnet, daß ein flüssiges Faserbindemittel während des Bohrvorgangs in Richtung Bohrstelle gesprüht wird, derart daß es die beim Bohrvorgang freigesetzten Asbestfasern bindet, bevor es sich anschließend verfestigt.

2. Verfahren nach Anspruch 1, dadurch gekennzeichnet, daß die Bohrstelle oberhalb einer Gegenunterlage angeordnet ist, so daß ein flüssiges Faserbindemittel das in die Bohrstelle eingebracht wird, sich zwischen Gegenunterlage und durchbohrtem asbesthaltigen Werkstoff ausbreitet und sich hier unter Einbindung des beim Durchbohren entstandenen Bohrstaubs verfestigt.

3. Verfahren nach Anspruch 1 oder 2, dadurch gekennzeichnet, daß das verfestigte Faserbindemittel eine dauerhafte Versiegelung der Werkstoffoberfläche im Bereich der Bohrstelle ausbildet, wobei die freigesetzten Asbestfasern in diese Versiegelung eingebunden sind.

4. Verfahren zum Sanieren eines mit Elementen aus Asbestzement (10) gedecktem Dach, wobei Abstandhalter (34) für eine zweite Dachschale (30) auf einer vorhandenen Dachunterkonstruktion (12) befestigt werden und hierfür die Elemente aus Asbestzement (10) durchbohrt werden, dadurch gekennzeichnet, daß das Durchbohren der Elemente aus Asbestzement (10) nach einem der Ansprüche 1 bis 3 erfolgt.

5. Verfahren nach Anspruch 4, dadurch gekennzeichnet, daß beim Durchbohren der Elemente aus Asbestzement (10) die vorhandene Dachunterkonstruktion (12) eine Gegenunterlage unter der Bohrstelle ausbildet.

6. Verfahren nach Anspruch 5, dadurch gekennzeichnet, daß die Elemente aus Asbestzement Wellplatten (10) sind die auf Pfetten (12) aufliegen, wobei das Durchbohren der Wellplatten (10) in den Tälern (16) der Wellplatten über den Pfetten (12) erfolgt.

7. Verfahren nach Anspruch 6, dadurch gekennzeichnet, daß die Abstandhalter (34) mittels Befestigungsmitteln (36) derart auf der vorhandenen Dachunterkonstruktion (12) getragen werden, daß sie nicht in Kontakt mit den Asbestzement-Wellplatten (10) sind.

## Claims

1. Process for drilling in materials containing asbestos, in particular in asbestos cement, characterised in that a liquid fibre-binding agent is sprayed in the direction of the location of the bore during the drilling process in such a way that it binds the asbestos fibres released during the drilling process before finally solidifying.

2. Process according to claim 1, characterised in that the bore location is positioned above an opposing substructure, so that a liquid fibre-binding agent introduced into the bore location spreads out between the opposing substructure and the bored material containing asbestos and solidifies there, binding the drilling dust produced during the drilling.

3. Process according to claim 1 or 2, characterised in that the solidified fibre-binding agent forms a permanent seal for the surface of the material in the area of the bore location, wherein the asbestos fibres released are bound into this seal.

4. Process for the reconstruction of a roof covered with elements made of asbestos cement (10), wherein spaces (34) for a second roof shell (30) are secured to an existing roof substructure (12) and the asbestos cement elements (10) are drilled through for this purpose, characterised in that the asbestos cement elements (10) are drilled through in accordance with one of claims 1 to 3.

5. Process according to claim 4, characterised in that, when the asbestos cement elements (10) are drilled through, the existing roof substructure (12) forms an opposing substructure under the bore location.

6. Process according to claim 5, characterised in that the asbestos cement elements are corrugated sheets (10), which rest on purlins, the corrugated sheets (10) being drilled through in the valleys (16) of the corrugated sheets above the purlins (12).

7. Process according to claim 6, characterised in that the spacers (34) are carried on the existing roof substructure (12) by securing means (36) in such a way that they are not in contact with the corrugated asbestos cement sheets (10).

## Revendications

1. Procédé pour le perçage de matériaux contenant de l'amiante, en particulier le perçage de l'amiante-ciment, caractérisé en ce qu'un liant liquide est projeté en direction du point de perçage pendant l'opération de perçage, de manière à lier les fibres d'amiante émises lors de l'opération de perçage avant de durcir ensuite.

2. Procédé selon la revendication 1, caractérisé en ce que le point de perçage est agencé au-dessus d'un contre-appui, de sorte qu'un liant liquide qui est introduit dans le point de perçage, se répand entre ledit contre-appui et le matériau percé contenant de l'amiante et y durcit en intégrant la poussière qui s'est formée lors du perçage.

3. Procédé selon la revendication 1 ou 2, caractérisé en ce que le liant durci forme une vitrification durable de la surface du matériau au niveau du point de perçage, les fibres d'amiante émises étant intégrées dans cette vitrification.

4. Procédé pour l'assainissement d'une toiture couverte d'éléments en amiante-ciment (10), des entretoises (34) pour une deuxième coque de toit (30) étant fixées sur une substructure de toit existante (12) et les éléments en amiante-ciment (10) étant percés pour cela, caractérisé en ce que le perçage des éléments en amiante-ciment (10) s'effectue selon l'une des revendications 1 à 3.

5. Procédé selon la revendication 4, caractérisé en ce que lors du perçage des éléments en amiante-ciment (10), la substructure de toit existante (12) forme un contre-appui sous le point de perçage.

6. Procédé selon la revendication 5, caractérisé en ce que les éléments en amiante-ciment sont des plaques ondulées (10) reposant sur des pannes (12), le perçage des plaques ondulées (10) s'effectuant dans les creux (16) desdites plaques ondulées, au-dessus des pannes (12).

7. Procédé selon la revendication 6, caractérisé en ce que les entretoises (34) sont portées par la substructure de toit existante (12), à l'aide de moyens de fixation (36), de façon à ce qu'elles ne soient pas en contact avec les plaques ondulées (10) en amiante-ciment.
